## Europäisches Patentamt

## European Patent Office

## Office européen des brevets

(11) Veröffentlichungsnummer: **0 064 093**
**B1**

---

(12) **EUROPÄISCHE PATENTSCHRIFT**

---

(45) Veröffentlichungstag der Patentschrift:
**13.02.85**

(21) Anmeldenummer: **81108644.6**

(22) Anmeldetag: **21.10.81**

(51) Int. Cl.⁴: **H 02 J 13/00**, H 02 B 1/24, H 02 H 7/22

---

(54) **Elektrische Schaltungsanordnung zur Nachbildung einer Sammelschienenanlage mit einem Störschreiber.**

---

(30) Priorität: **24.04.81 DE 3116393**

(43) Veröffentlichungstag der Anmeldung:
**10.11.82 Patentblatt 82/45**

(45) Bekanntmachung des Hinweises auf die Patenterteilung:
**13.02.85 Patentblatt 85/7**

(84) Benannte Vertragsstaaten:
**AT BE CH FR IT LI NL SE**

(56) Entgegenhaltungen:
**DE - A - 2 753 659**
**DE - B - 1 264 580**

(73) Patentinhaber: **Siemens Aktiengesellschaft, Berlin und München Wittelsbacherplatz 2, D-8000 München 2 (DE)**

(72) Erfinder: **Segschneider, Josef, Lederhosenstrasse 27, D-8551 Röttenbach (DE)**
Erfinder: **Gmeinder, Georg, Dipl.-Ing., Daimlerstrasse 38, D-8520 Erlangen (DE)**

---

## Beschreibung

Die Erfindung bezieht sich auf eine elektrische Schaltungsanordnung zur Nachbildung einer Sammelschienenanlage mit einem Störschreiber der im Oberbegriff des Anspruchs 1 näher bezeichneten Art, wie sie beispielsweise aus der DE-B1-1 264 580 bekannt ist.

Solche Schaltungsanordnungen dienen der Spannungsmessung zum Zwecke der Prüfung und Überwachung jeweils zu Schaltkomplexen zusammengeschalteter Teile von Sammelschienenanlagen. Dazu bedient man sich der in den Abzweigen der Sammelschienenanlagen vorhandenen Spannungswandler. Zu Überwachungszwecken besitzen solche Schaltungsanordnungen außerdem sog. Störschreiber, die sich im Falle einer Spannungsunterbrechung oder eines Spannungseinbruchs innerhalb von etwa 20 Millisekunden einschalten, um ein Störprotokoll zu schreiben.

Es kommt nun vor, daß ein normaler Umschaltvorgang, etwa bei der Zuschaltung eines weiteren Abzweigs auf eine Sammelschienenleitung länger dauert als die zum Einschalten des Störschreibers vorgesehene Zeit, so daß der Störschreiber zu arbeiten beginnt, ohne daß eine Störung vorliegt, d. h. ein Umschaltvorgang als Störung registriert wird.

Der Erfindung liegt die Aufgabe zugrunde, eine Schaltungsanordnung der eingangs genannten Art so zu gestalten, daß der Störschreiber bei normalen, d. h. gewollten Schaltvorgängen auch dann nicht anspricht, wenn diese die Ansprechzeit des Störschreibers überschreiten.

Diese Aufgabe wird durch die im Patentanspruch 1 gekennzeichnete Erfindung gelöst.

Der Vorteil dieser erfindungsgemäßen Schaltungsanordnung besteht vor allem darin, daß Fehlprotokollierungen des Störschreibers mit Hilfe einiger preiswerter und in die Schaltungsanordnung integrierbarer Bauelemente in Einschubtechnik vermieden werden.

Ein Ausführungsbeispiel der Erfindung wird anhand von Schaltbildern im folgenden näher erläutert. Es zeigt

Fig. 1 eine Schaltungsanordnung für die Nachbildung eines Abschnitts einer Sammelschienenanlage mit drei Sammelschienenleitungen und drei Abzweigen,

Fig. 2 den Steuerungsteil der Schaltungsanordnung nach Fig. 1 und

Fig. 3 Einzelheiten einer der in Fig. 2 schematisch dargestellten Steuerschaltungen für die Störschreiberunterbrechung.

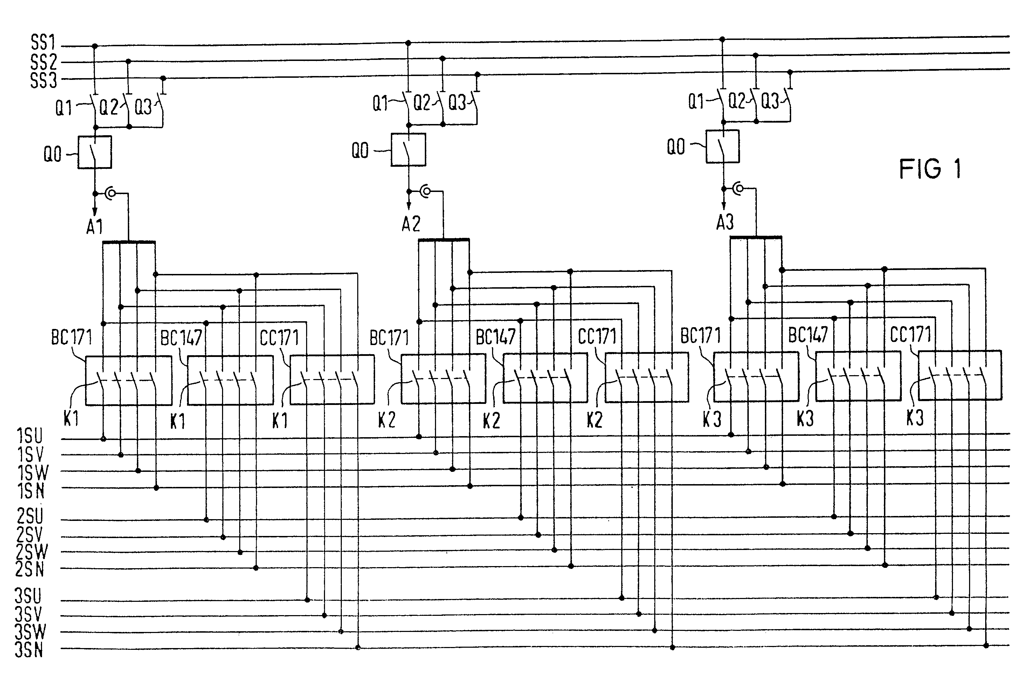

In Fig. 1 sind mit SS 1, SS 2 und SS 3 je eine dreiphasige Sammelschienenleitung mit Nulleiter bezeichnet. Für diese Sammelschienenleitungen stehen drei Abzweige A 1, A 2, A 3 zur Verfügung, die über Trennschalter Q 1, Q 2, Q 3 und Leistungsschalter Q 0 wahlweise mit einer der Sammelschienenleitungen verbunden werden können. Jeder der drei Abzweige besitzt einen Spannungswandler T 1, T 2 bzw. T 3. Diese Elemente bilden die Primäranlage. Die Spannungswandler sind über entsprechende Zuleitungen mit der Schaltungsanordnung zur Nachbildung der Primäranlage verbunden. Die einzelnen Verbindungsleitungen, die denen der Abzweige zu jeder der Sammelschienenleitungen entsprechen, sind an im Ruhezustand geöffnete Kontaktsätze K 1, K 2 und K 3 von Zuschaltrelaisgruppen BC 171, BC 147, CC 171 angeschlossen, welche bei entsprechender Zuschaltung eines Abzweigs eine Verbindung zu den Sammelschienennachbildungsleitungen 1SU, 1SV, 1SW, 1SN; 2SU, 2SV, 2SW, 2SN und 3SU, 3SV, 3SW, 3SN, herstellen.

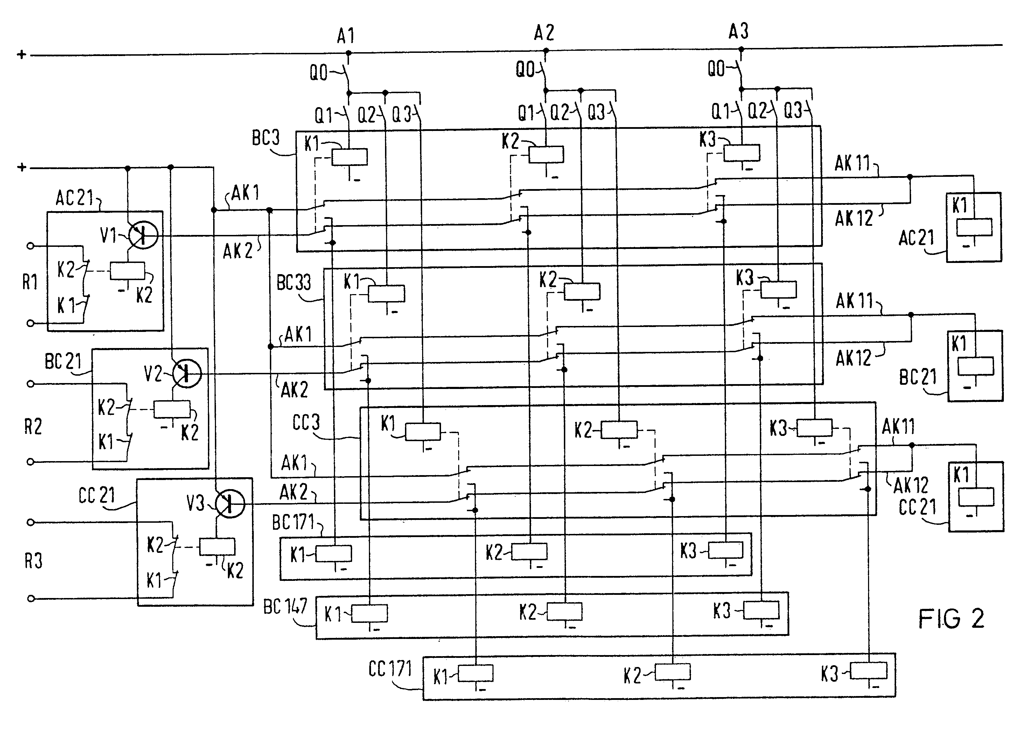

In Fig. 2 sind die genannten Zuschaltrelaisgruppen mit den zugeordneten Steuerrelaiskreisen dargestellt. Dabei sind die Steuerrelais K 1, K 2 und K 3 entsprechend ihrer Zuordnung zu der jeweiligen Sammelschienenleitung zu Gruppen zusammengefaßt, wobei die mit BC 3 bezeichnete Gruppe der Sammelschienenleitung SS 1, die mit BC 33 bezeichnete Gruppe der Sammelschienenleitung SS 2 und die mit CC 3 bezeichnete Gruppe der Sammelschienenleitung SS 3 zugeordnet ist. Jedes dieser Relais jeder Gruppe ist mit zwei Umschaltkontakten versehen. Die Öffner der ersten Umschaltkontakte bilden gemeinsam je eine Reihenschaltung AK 1—AK 11, die zusammen mit den Erregerspulen von Störschreiber-Betriebsrelais AC 21, K 1; BC 21, K 1 und CC 21, K 1 in Reihe geschaltet sind und deren Erregerstromkreise bilden. Die Öffner der zweiten Umschaltkontakte der Steuerrelais K 1, K 2, K 3 bilden zur ersten Reihenschaltung parallel liegende zweite Reihenschaltungen AK 2—AK 12. Beide Reihenschaltungen sind an ihren den Störschreiber-Betriebsrelais zugewandten Seiten miteinander verbunden. Die anderen Enden AK 1 der ersten Reihenschaltungen AK 1—AK 11 sind mit dem Pluspol einer Erregerstromquelle, die anderen Enden AK 2 der zweiten Reihenschaltungen AK 2—AK 12 sind mit je einem Steuermittel in Gestalt eines Transistors V 1, V 2, V 3 der Steuervorrichtungen für die Störschreiberunterbrechung AC 21, BC 21, CC 21 verbunden, denen Schaltmittel AC 21, K 2; BC 21, K 2 und CC 21, K 2 zur Störschreiberunterbrechung zugeordnet sind. Die beiden Schließer eines jeden der den Steuerrelais K 1, K 2, K 3 zugeordneten Umschalter sind untereinander und mit je einer Erregerspule K 1, K 2, K 3 von Zuschaltrelais verbunden, die ebenfalls entsprechend den Steuerrelais in Gruppen BC 171, BC 147 und CC 171 zusammengefaßt sind. Dabei ist die Gruppe BC 171 der Sammelschienenleitungen SS 1, die Gruppe BC 147 der Sammelschienenleitung SS 2 und die Gruppe CC 171 der Sammelschienenleitung SS 3 mit je einer Relaisspule K 1, K 2, K 3 für jeden Abzweig zugeordnet.

Die Schaltungsanordnung nach den Fig. 1 und 2 bewirkt auf folgende Weise, daß auch bei der Zuschaltung mehrerer Abzweige auf eine einzige Sammelschienenleitung nur jeweils ein Spannungswandler T 1, T 2 und T 3 einer dieser Ab-

zweige A 1, A 2, A 3 für die Spannungsmessung herangezogen wird: Es sei angenommen, daß die Trennschalter Q 1 der Abzweige A 1 und A 2 sowie die zugeordneten Leistungsschalter Q 0 geschlossen und somit die Abzweige A 1 und A 2 mit der Sammelschienenleitung SS 1 verbunden sind. Durch das Schließen der dem Trennschalter Q 1 und dem Leistungsschalter Q 0 zugeordneten Hilfskontakte gleicher Bezeichnung in Fig. 2 werden die Relaisspulen BC 3, K 1 und K 2 erregt. Dabei werden die beiden diesen Relais zugeordneten Umschalter betätigt, was zur Folge hat, daß das Zuschaltrelais BC 171, K 1 erregt wird, seine Kontakte BC 171, K 1 (Fig. 1), schließt und den Spannungswandler T 1 mit der Schaltungsanordnung verbindet. Das durch den Umschaltkontakt von BC 3, K 2 ebenfalls angesteuerte Zuschaltrelais BC 171, K 2 kann deswegen nicht erregt werden, weil durch Betätigen des Umschaltkontaktes des Steuerrelais BC 3, K 1 die Erregerstromkreise aller in der Kontaktkette AK 1—AK 11 rechts davon befindlichen Erregerstromkreise der Zuschaltrelais unterbrochen sind. Erst wenn der Abzweig A 1 von der Sammelschienenleitung SS 1 getrennt wird, so daß der obere Umschaltkontakt des Steuerrelais BC 3, K 1 wieder in seinen ursprünglichen Zustand zurückkehrt und damit das Zuschaltrelais BC 171, K 1 abfällt, seine Kontakte BC 171, K 1 (Fig. 1) öffnet und damit den Spannungswandler T 1 von der Schaltungsanordnung trennt, kann das Zuschaltrelais BC 171, K 2 erregt werden, so daß seine Kontakte BC 171, K 2 (Fig. 1) schließen und der Spannungswandler T 2 des Abzweigs A 2 in Funktion tritt. Dieser Vorgang wiederholt sich bei entsprechenden anderen Abzweig-Sammelschienenleitungs-Kombinationen. Dabei hat erkennbar der jeweils links befindliche Spannungswandler den Vorrang vor den weiter rechts angeordneten im Falle gleicher Verbindungswege. Damit ist sichergestellt, daß in bezug auf die Wahl der jeweiligen Abzweige keine Parallelschaltung von Spannungswandlern erfolgen kann.

Die Umschaltzeit für den oben geschilderten Vorgang des Trennens eines Spannungswandlers von der Schaltungsanordnung und der Verbindung mit einem anderen Spannungswandler ist länger als die Ansprechdauer der den einzelnen Sammelschienenleitungen zugeordneten Störschreiber zur Anfertigung eines Störprotokolls im Falle eines Spannungseinbruchs. Um das Ingangsetzen der Störschreiber bei einem normalen Umschaltvorgang der beschriebenen Art zu vermeiden, besitzt die vorliegende Schaltungsanordnung die Störschreiber-Steuervorrichtungen AC 21, BC 21 und CC 21. Jede dieser Störschreiber-Steuervorrichtungen enthält ein Störschreiber-Betriebsrelais K 1 und ein Störschreiber-Unterbrecherrelais K 2. Beiden ist je ein Ruhekontakt zugeordnet. Die Ruhekontakte jeder Störschreiber-Steuervorrichtung sind in Reihe geschaltet und bilden den Schaltkreis des jeweils zugeordneten Störschreibers R 1, R 2 bzw. R 3.

Wenn kein Abzweig zugeschaltet ist, ist auch kein Steuerrelais BC 3, K 1 usw. erregt. Alle Ruhekontaktketten AK 1—AK 11 und AK 2—AK 12 sind geschlossen und damit die Störschreiber-Betriebsrelais AC 21, K 1 usw. angezogen und ihre zugeordneten Ruhekontakte geöffnet. Damit sind alle Störschreiber R 1, R 2 und R 3 außer Betrieb. Wird nun beispielsweise die Sammelschienenleitung SS 1 des Abzweigs A 2 durch Schließen der Hilfskontakte Q 0 und Q 1 des Abzweigs A 2 geschlossen, so wird die Relaisspule des Steuerrelais BC 3, K 2 erregt und betätigt seine Umschaltkontakte. Dadurch zieht das Zuschaltrelais BC 171, K 2 an und schließt seinen Kontaktsatz BC 171, K 2 (Fig. 1). Damit ist der Spannungswandler T 2 mit der Nachbildung der Sammelschienenleitung SS 1 der Schaltungsanordnung verbunden. Gleichzeitig werden der Erregerstromkreis des Störschreiber-Betriebsrelais AC 21, K 1 unterbrochen und das Störschreiber-Unterbrecherrelais AC 21, K 2 nach Durchschalten des Transistors V 1 erregt. Dabei schließt der Ruhekontakt AC 21, K 1 und öffnet der Ruhekontakt AC 21, K 2. Damit ist der Erregerstromkreis des Störschreibers R 1 noch geöffnet. Auf noch zu beschreibende Weise wird nach Ablauf einer konstanten Zeit, die länger ist als die Umschaltdauer von einem Spannungswandler auf einen anderen, die Erregung des Störschreiber-Unterbrecherrelais AC 21, K 2 unterbrochen, so daß sein Ruhekontakt den Stromkreis für den Störschreiber R 1 schließt und diesen in Schreibbereitschaft versetzt. Wird nun der Abzweig A 1 auf die gleiche Sammelschienenleitung SS 1 geschaltet, so schließen die Hilfskontakte Q 1 und Q 0 des Abzweigs A 1. Damit zieht das Steuerrelais BC 3, K 1 an und betätigt seine Umschaltkontakte. Dies hat zunächst zur Folge, daß der Erregerstromkreis zum Zuschaltrelais BC 171, K 2 unterbrochen wird und dieses abfällt, so daß durch Öffnen seines Kontaktsatzes K 2 (Fig. 1) der Spannungswandler T 2 des Abzweigs A 2 von der Nachbildung der Sammelschienenleitung SS 1 der Schaltungsanordnung getrennt wird. Sodann zieht das Zuschaltrelais BC 171, K 1 an und schließt seinen Kontaktsatz K 1 (Fig. 1), so daß der Spannungswandler T 1 des Abzweigs A 1 mit der Nachbildung der Sammelschienenleitung SS 1 der Schaltungsanordnung verbunden ist. Dabei erfährt die Meßspannung eine kurzzeitige Unterbrechung, die, wenn sie ca. 20 Millisekunden überschreitet, was, um ein versehentliches Parallelschalten von zwei Spannungswandlern zu vermeiden, praktisch immer der Fall ist, zu einer Inbetriebsetzung des betreffenden Störschreibers und damit zur Anzeige einer Pseudostörung führt, d. h. einer Störung, die in Wirklichkeit ein normaler Umschaltvorgang war. Nun wird jedoch durch das Betätigen der Umschaltkontakte des Steuerrelais BC 3, K 1 der Stromkreis des Störschreiber-Unterbrecherrelais AC 21, K 2 über den Transistor V 1 kurzzeitig unterbrochen. Auf eine im folgenden noch zu beschreibende Weise führt dies dazu, daß das Relais AC 21, K 2 während einer Dauer erregt wird, die größer ist als die Umschaltdauer von einem Spannungswandler auf einen anderen in der eben beschriebenen Weise. Um diese Dauer öffnet auch der Ruhekontakt AC 21, K 2 und unterbricht den Betriebsstromkreis des Störschreibers R 1, so daß dieser keine Störung registrieren kann.

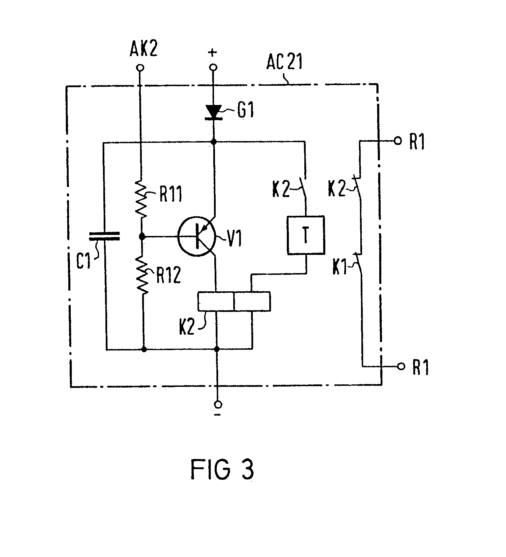

In Fig. 3 ist im Prinzip dargestellt, mit welchen Mitteln und auf welche Weise eine solche Unterbrechung des betreffenden Störschreibers R 1, R 2 oder R 3 erreicht wird. Bei den Relais AC 21, K 1; BC 21, K 1 und CC 21, K 1 (Fig. 2) handelt es sich um gepolte Relais. Diese befinden sich normalerweise in der Ausgangslage, so daß die ihnen zugeordneten Ruhekontakte geschlossen sind. Im Falle der Zu- oder Abschaltung eines Abzweigs, wie eben beschrieben, ändert mindestens eines der Steuerrelais der betreffenden Gruppe BC 3, BC 33 bzw. CC 3 seinen Schaltzustand und unterbricht kurzzeitig das Pluspotential am Basiswiderstand R 12 des Spannungsteilers R 11, R 12 des betreffenden Transistors im Setzkreis des ihm zugeordneten gepolten Relais K 2. Der Transistor steuert dann durch und setzt das ihm zugeordnete gepolte Relais K 2 um. Dadurch öffnet sein Ruhekontakt und unterbricht den von ihm beeinflußten Störschreiber. Gleichzeitig wird über den Schließkontakt des gepolten Relais K 2 eine Zeitstufe T in Betrieb gesetzt, die nach einer festgelegten Zeit, die deutlich länger ist als die Ansprechdauer der Störschreiber, das gepolte Relais K 2 mit Hilfe eines Impulses in die Ausgangslage zurücksetzt. Dadurch schließt sein Ruhekontakt wieder und der betreffende Störschreiber geht erneut in Betrieb und ist für normale Fehlerprotokollaufzeichnungen wieder funktionsbereit.

Um zu erreichen, daß auch eine »innere« Störung der Nachbildungsschaltung, etwa durch Ausfall der Steuerspannung, nicht als Störung der Sammelschienenanlage registriert wird, soll der betroffene Störschreiber auch in einem solchen Falle unterbrochen werden. Dies kann durch Anordnung einer Kondensator-Gleichrichter-Kombination erreicht werden, bei der der Kondensator C 1 zwischen dem Emitter des Transistors V 1 und dem negativen Pol der Steuerspannung und der Gleichrichter G 1 in die Plusleitung vor dem jeweiligen Anschlußpunkt der Störschreiber-Steuervorrichtung eingefügt wird. Dadurch wird bewirkt, daß bei einem Ausfall der Steuerspannung die Emitter-Kollektor-Spannung des Transistors V 1 vom aufgeladenen Kondensator C 1 gehalten wird, während das Pluspotential am Basiswiderstand R 12 fehlt. Dieser Zustand führt, wie oben beschrieben, ebenfalls zu einer Unterbrechung des betreffenden Störschreibers bis zur Wiederkehr der Steuerspannung.

### Patentansprüche

1. Elektrische Schaltungsanordnung zur Nachbildung einer Sammelschienenanlage mit einem Störschreiber, deren Sammelschienenleitungen aus einer der Art der Anlage entsprechenden Anzahl von Sammelschienen (SS 1, SS 2, SS 3) gebildet ist, denen mit je einem Spannungswandler (T 1, T 2, T 3) versehene Abzweige (A 1, A 2, A 3) zugeordnet sind, die über Trenn- (Q 1, Q 2, Q 3) und Leistungsschalter (Q 0) an die zugeordneten Sammelschienenleitungen anschließbar sind, und der Schaltungsanordnung zum Zwecke der Spannungsmessung des jeweils einen Schaltkomplex bildenden zusammengeschalteten Teils der Sammelschienenanlage unter Benutzung der vorhandenen Spannungswandler (T 1, T 2, T 3) Zuschaltrelais (BC 171, K 1, K 2, K 3) zum Verbinden einer Meßleitung der Schaltungsanordnung mit einem Spannungswandler der Sammelschienenanlage sowie jeder Sammelschienenleitung (SS 1, SS 2, SS 3) eines jeden nachgebildeten Abzweigs von Hilfskontakten der Trenn- und Leistungsschalter betätigte Steuerrelais (K 1, K 2, K 3) zugeordnet sind, die bei der Aufschaltung mehrerer Abzweige auf eine Sammelschienenleitung die Zuschaltrelais (BC 171, K 1, K 2, K 3) im Sinne der Verbindung nur eines einzigen Spannungswandlers mit der Nachbildung der betreffenden Sammelschienenleitung der Schaltungsanordnung steuern, wobei die den einzelnen Sammelschienenleitungen (SS 1, SS 2, SS 3) zugeordneten Steuerrelais sowie die Zuschaltrelais verschiedener Abzweige zu Relaisgruppen (BC 3, BC 33, CC 3) zusammengefaßt sind, dadurch gekennzeichnet, daß jedem der Steuerrelais (K 1, K 2, K 3) jeder der Relaisgruppen (BC 3, BC 33, CC 3) zwei Umschaltkontakte zugeordnet sind, deren Schließer miteinander verbunden und im Erregerstromkreis der Zuschaltrelais (BC 171, K 1, K 2, K 3 . . .) angeordnet sind, während die Öffner der ersten Umschaltkontakte gemeinsam eine Reihenschaltung (AK 1—AK 11) und die Öffner der zweiten Umschaltkontakte eine zur ersten parallele weitere Reihenschaltung (AK 2—AK 12) bilden und daß beide Reihenschaltungen an ihren einen Enden (AK 11, AK 12) miteinander verbunden sind und die den miteinander verbundenen Enden (AK 11, AK 12) abgewandten Enden (AK 1) der ersten Reihenschaltungen gemeinsam mit einem Pol einer Erregerstromquelle (+) und diejenigen der zweiten Reihenschaltungen (AK 2) mit je einem Steuermittel (V 1, V 2, V 3) zur Erregung eines Schaltmittels (K 2) verbunden sind, das im Ruhezustand einen Störschreiber (R 1, R 2, R 3) und im erregten Zustand einen Zeitschalter (T) betätigt, der das Schaltmittel (K 2) nach Ablauf einer Zeit, die größer als die für den Umschaltvorgang von einem Abzweig der Sammelschienenanlage auf einen anderen Abzweig benötigten Zeit, unterbricht.

2. Schaltungsanordnung nach Anspruch 1, dadurch gekennzeichnet, daß als Steuermittel (V 1, V 2, V 3) elektronische Schaltelemente und als Schaltmittel (K 2) polarisierte Relais verwendet sind, deren Setzspulen von den zugeordneten elektronischen Schaltelementen und deren Rücksetzspulen von den zugeordneten Zeitschaltern erregbar sind, und die polarisierten Relais im gesetzten Zustand den jeweils zugeordneten Störschreiber (R 1, R 2, R 3) ausschalten und im rückgesetzten Zustand einschalten.

3. Elektronische Schaltungsanordnung nach Anspruch 2, dadurch gekennzeichnet, daß an den miteinander verbundenen Enden der Reihenschaltungen (AK 11, AK 12) Erregerspulen von Störschreiber-Betriebsrelais (AC 21, K 1; BC 21, K 1 und CC 21, K 1) angeschlossen sind, deren Ruhekontakte in Serie geschaltet sind zu den im Einschaltstromkreis der Störschreiber (R 1, R 2, R 3) angeordneten Ruhekontakten der Schaltmittel (K 2).

4. Elektronische Schaltungsanordnung nach Anspruch 2 oder 3, dadurch gekennzeichnet, daß parallel zur Serienschaltung von elektronischem Schaltelement (V 1) und Schaltmittel (K 2) ein Kondensator (C 1) und in Serie zur Erregerstromquelle ein Gleichrichter (G 1) angeordnet sind.

## Claims

1. An electric circuit arrangement for the representation of a bus-bar system with a failure recorder, whose bus-bar lines are formed from a number of bus bars (SS 1, SS 2, SS 3) corresponding to the type of system, and which are assigned branches (A 1, A 2, A 3) each provided with a respective voltage transformer (T 1, T 2, T 3) to be connected to the assigned bus-bar lines by means of isolating switches (Q 1, Q 2, Q 3) and power switches (Q 0), and the present voltage transformers (T 1, T 2, T 3) being employed for the purpose of the voltage measurement of the interconnected component of the bus-bar system, which forms a switching complex in each case, by assigned switching relays (BC 171, K 1, K 2, K 3) connecting a measuring line of the circuit arrangement to a voltage transformer of the bus-bar system and each bus-bar line (SS 1, SS 2, SS 3) of each represented branch assigned control relays (K 1, K 2, K 3) operated by auxiliary contacts of the isolating and power switches and which, when superimposing a plurality of branches upon a bus-bar line, control the switching relays (BC 171, K 1, K 2, K 3) in accordance with the connection of only one signal voltage transformer with the representation of the respective bus-bar line of the circuit arrangement, where the control relays assigned to the individual bus-bar lines (SS 1, SS 2, SS 3) and the control relays of different branches are combined to form relay groups (BC 3, BC 33, CC 3) characterised in that each of the control relays (K 1, K 2, K 3) of each of the relay groups (BC 3, BC 33, CC 3) is assigned two changeover contacts, whose normally-open contacts are mutually connected and arranged in the energisation circuit of the switching relays (BC 171, K 1, K 2, K 3), whereas the normally-closed contacts of the first changeover contacts form a common series connection (AK 1—AK 11) and the normally-open contacts of the second changeover contacts form a further series connection (AK 2—AK 12) parallel to the first one, and that both series connections are connected to one another at their one ends (AK 11, AK 12) and the ends (AK 1) of the first series connections remote from the mutually connected ends (AK 11, AK 12) commonly connected to a pole (+) of an energising current source, and those of the second series connections (AK 2) are each connected to a control means (V 1, V 2, V 3) for triggering a switching means (K 2) which in the rest position operates a failure recorder (R 1, R 2, R 3) and in the energised state a time switch (T), which interrupts the switching means (K 2) after a lapse of time greater than the time required for the changeover process from a branch of the bus-bar system to another branch.

2. A circuit arrangement as claimed in claim 1, characterised in that electronic switching means are used as control means (V 1, V 2, V 3) and polarized relays are used as switching means (K 2), whose setting coils are energised by the assigned electronic switching elements and whose resetting coils are energised by the assigned time switches, and in the set state the polarized relays switch off the respectively assigned failure recorder (R 1, R 2, R 3), and switch it on in the reset state.

3. An electronic circuit arrangement as claimed in claim 2, characterised in that there are connected to the mutually connected ends of the series connections (AK 11, AK 12) excitation coils of failure recorder operating relays (AC 21, K 1; BC 21, K 1 and CC 21, K 1), whose rest contacts are connected in series with the rest contacts of the switching means (K 2) arranged in the starting circuit of the failure recorders (R 1, R 2, R 3).

4. An electronic circuit arrangement as claimed in claim 2 or 3, characterised in that a capacitor (C 1) is arranged parallel to the series connection of electronic switching element (V 1) and switching means (K 2) and a rectifier is arranged in series with the energising current source.

## Revendications

1. Montage électrique servant à simuler une installation de barres omnibus, comportant un enregistreur de perturbations et dont les lignes formant barres omnibus sont constituées par un nombre, correspondant au type de l'installation, de barres omnibus (SS 1, SS 2, SS 3) auxquelles sont associées des branches de dérivation (A 1, A 2, A 3) équipées de transformateurs de tension (T 1, T 2, T 3) respectifs et qui peuvent être raccordées par l'intermédiaire de sectionneurs (Q 1, Q 2, Q 3) et d'interrupteurs de puissance (Q 0) aux lignes formant barres omnibus associées, et dans lequel des relais de mise en circuit (BC 171, K 1, K 2, K 3) servant à relier une ligne de mesure du montage à un transformateur de tension de l'installation de barres omnibus est associé au montage en vue de réaliser la mesure de la tension de la partie interconnectée, formant respectivement un complexe de commutation, de l'installation de barres omnibus moyennant l'utilisation des transformateurs de tension (T 1, T 2, T 3) présents, et à chaque ligne formant barre omnibus (SS 1, SS 2, SS 3) de chaque branche de dérivation simulée sont associés des relais de commande (K 1, K 2, K 3) actionnés par des contacts auxiliaires des sectionneurs et interrupteurs de puissance et qui, lors du raccordement de plusieurs branches de dérivation à une ligne formant barre omnibus, commandent les relais de mise en circuit (BC 171, K 1, K 2, K 3) dans le sens de l'établissement de la liaison d'un seul transformateur de tension avec le circuit de simulation de la ligne formant barre omnibus considérée du montage, les relais de commande associés aux différentes lignes formant barres omnibus (SS 1, SS 2, SS 3) ainsi que les relais de mise en circuit de différentes branches de dérivation étant réunis pour former des groupes de relais (BC 3, BC 33, CC 3), caractérisé par le fait qu'à chacun des relais de commande (K 1, K 2, K 3) de chacun des groupes de relais (BC 3, BC 33, CC 3) sont associés deux contacts de commutation, dont les contacts de fermeture sont reliés entre eux et sont disposés dans le circuit d'excitation des relais de mise en circuit (BC 171, K 1, K 2, K 3 . . .), tandis que les contacts d'ouverture faisant partie des premiers contacts de commutation forment en commun un circuit-série (AK 1—AK 11) et que les contacts d'ouverture faisant partie des seconds contacts de commutation forment un autre circuit-série (AK 2—AK 12) parallèle au premier circuit-série, et que les deux circuits-séries sont reliés entre eux à l'une de leurs extrémités (AK 11—AK 12) et que les extrémités (AK 1) tournées à l'opposé des extrémités (AK 11, AK 12) reliées entre elles, des premiers circuits-séries sont reliées en commun à un pôle d'une source de courant d'excitation (+) et à ceux des seconds circuits-séries (AK 2), par des moyens respectifs de commande (V 1, V 2, V 3) servant à réaliser l'excitation d'un moyen de commutation (K 2) qui, à l'état de repos, actionne un enregistreur de perturbatin (R 1, R 2, R 3) et, à l'état excité, actionne une minuterie (T) qui débranche le moyen de commutation (K 2) après l'écoulement d'une durée qui est supérieure à la durée nécessaire pour le processus de commutation faisant passer d'une branche de dérivation de l'installation de barres omnibus à une autre branche de dérivation.

2. Montage suivant la revendication 1, caractérisé par le fait qu'on utilise comme moyens de commande (V 1, V 2, V 3) des circuits de commutation électroniques et comme moyens de commutation (K 2) des relais polarisés, dont les bobines de positionnement peuvent être excitées par les circuits de commutation électroniques associés et dont les bobines de remise à l'état initial peuvent être excitées par les minuteries associées, et qu'à l'état positionné, les relais polarisés débranchent l'enregistreur de perturbations (R 1, R 2, R 3) respectivement associé et dans leur état initial, branchent cet enregistreur.

3. Montage électronique suivant la revendication 2, caractérisé par le fait qu'aux extrémités reliées entre elles des circuits-série (AK 11, AK 12) sont raccordées des bobines d'excitation de relais de fonctionnement des enregistreurs de perturbations (AC 21, K 1; BC 21, K 1 et CC 21, K 1), dont les contacts de repos sont branchés en série avec les contacts de repos des moyens de commutation (K 2), qui sont disposés dans le circuit de branchement des enregistreurs de perturbations (R 1, R 2, R 3).

4. Montage électronique suivant la revendication 2 ou 3 caractérisé par le fait qu'un condensateur (C 1) est branché en parallèle avec le circuit-série formé du circuit de commutation électronique (V 1) et du moyen de commutation (K 2) et qu'un redresseur (G 1) est branché en série avec la source de courant d'excitation.

FIG 1

SS1 SS2 SS3

Q0 Q1 Q2 Q3 — A1
Q0 Q1 Q2 Q3 — A2
Q0 Q1 Q2 Q3 — A3

BC171 BC147 CC171 — K1
BC171 BC147 CC171 — K2
BC171 BC147 CC171 — K3

1SU 1SV 1SW 1SN 2SU 2SV 2SW 2SN 3SU 3SV 3SW 3SN

FIG 2

0 064 093

FIG 3